# EUROPÄISCHE PATENTSCHRIFT

(11) **EP 3 209 866 B1**
(45) Veröffentlichungstag und Bekanntmachung des Hinweises auf die Patenterteilung: **06.03.2019**
(21) Anmeldenummer: 16700147.8
(22) Anmeldetag: 05.01.2016
(51) Int. Cl.: F01D 17/14, F16K 47/08

(54) **REGELVENTIL UND TURBINE**
CONTROL VALVE AND TURBINE
SOUPAPE DE RÉGULATION ET TURBINE

(30) Priorität: 14.01.2015 EP 15151066
(43) Veröffentlichungstag der Anmeldung: 30.08.2017
(73) Patentinhaber: Siemens Aktiengesellschaft, 80333 München (DE)
(72) Erfinder: DOMNICK, Bernhard Clemens, 46569 Hünxe (DE); BENRA, Friedrich-Karl, 47057 Duisburg (DE); MUSCH, Christian, 45481 Mülheim an der Ruhr (DE)
(86) Internationale Anmeldenummer: PCT/EP2016/050055
(87) Internationale Veröffentlichungsnummer: WO 2016/113147

(56) Entgegenhaltungen:
- GB-A- 1 223 983
- US-A- 5 150 736
- US-A- 5 318 270

## Beschreibung

Die Erfindung betrifft ein Regelventil zum Regeln eines gasförmigen Volumenstroms, insbesondere eines Dampfvolumenstroms, mit einem Ventilgehäuse, mit einem Ventilsitz und mit einem relativ zu dem Ventilsitz entlang einer Verlagerungsachse verlagerbaren Ventildrosselelement, bei welchem das Ventilgehäuse den Ventilsitz ausgestaltet und bei welchem das verlagerbare Ventildrosselelement einen mit dem Ventilsitz wechselwirkenden Drosselkantenbereich aufweist.

Die Erfindung betrifft des Weiteren eine Turbine, insbesondere eine Dampfturbine, mit einer Vielzahl an Ventileinrichtungen.

Gattungsgemäße Regelventile sind insbesondere an Dampfturbinen bekannt. Werden derartige Regelventile beispielsweise in einem angedrosselten Betriebszustand, das heißt, in einem nicht gänzlich geöffneten oder geschlossenen Betriebszustand des Regelventils betrieben, bildet sich in einem Strömungsinnenraum des Regelventils nahezu immer ein charakteristisches Strömungsbild aus, welches im Wesentlichen durch die Ausbildung eines Wandstrahlbereichs mit Strömungsgeschwindigkeiten gekennzeichnet ist, welche erheblich höher sind als die Strömungsgeschwindigkeiten eines Kernströmungsbereichs eines Volumenstroms.

Insofern verursachen die unterschiedlichen Strömungsgeschwindigkeiten eine Scherschicht zwischen dem Wandstrahlbereich des das Regelventil durchströmenden Volumenstroms und dem Kernströmungsbereich dieses Volumenstroms mit oftmals nicht zu vernachlässigenden hohe Geschwindigkeitsgradienten.

Sowohl aus experimentellen als auch aus numerischen Untersuchungen des Strömungsverhaltens an solchen Regelventilen ist bekannt, dass es in der Scherschicht zu Strömungsinstabilitäten kommen kann, welche kritische Resonanzeffekte in dem Strömungsraum des Regelventils verursachen können. Hierdurch kann es im schlimmsten Fall zu einer derartig unerwünschten Anregung der Regelventilstruktur kommen, welche eine Schädigung dieser Regelventilstruktur verursachen kann.

Um diesen Resonanzeffekten entgegenzuwirken, ist es bekannt, im Bereich des Ventilsitzes an dem Ventilgehäuse Strömungsgleichrichter vorzusehen, welche zu einer positiven Beeinflussung der Scherschicht beitragen können. Allerdings führen diese Einbauten in Form von Strömungsgleichrichtern nahezu immer zu erheblichen Strömungsverlusten, wodurch die Gesamtleistung der Turbine bzw. Dampfturbine gesenkt wird.

In US 5,150,736 ist ein Ventil offenbart, das ein zylindrisches Ventilabsperrorgan und einen ringförmigen Ventilsitz aufweist.

Es ist Aufgabe der Erfindung, gattungsgemäße Regelventile weiterzuentwickeln.

Die Aufgabe wird gelöst durch die Merkmale des unabhängigen Patentanspruchs 1. Die Aufgabe wird von einem Regelventil zum Regeln eines gasförmigen Volumenstroms, insbesondere eines Dampfvolumenstroms, mit einem Ventilgehäuse, mit einem Ventilsitz und mit einem relativ zu dem Ventilsitz entlang einer Verlagerungsachse verlagerbaren Ventildrosselelement gelöst, bei welchem das Ventilgehäuse den Ventilsitz ausgestaltet und bei welchem das verlagerbare Ventildrosselelement einen mit dem Ventilsitz wechselwirkenden Drosselkantenbereich aufweist, wobei das Regelventil mehrere mit dem Drosselkantenbereich wechselwirkende Volumenstromverwirbelungselemente aufweist, welche Scherschichtinstabilitäten in einer Scherschicht zwischen einem Wandstrahlbereich des gasförmigen Volumenstroms und einem Kernströmungsbereich des gasförmigen Volumenstroms vermeiden oder zumindest reduzieren.

Durch die mit dem Drosselkantenbereich wechselwirkenden Volumenstromverwirbelungselemente kann die Scherschicht zwischen einem Wandstrahlbereich des gasförmigen Volumenstroms und einem Kernströmungsbereich des gasförmigen Volumenstroms dahingehend manipuliert bzw. positiv beeinflusst werden, dass kritische Instabilitäten im Bereich der Scherschicht des gasförmigen Volumenstrom reduziert oder vermieden werden.

Insbesondere wird die Scherschicht hierbei signifikant besser durchmischt.

Hierdurch können konstruktiv sehr einfach unerwünschte Resonanzeffekte am Regelventil vermieden oder zumindest derart gedämpft werden, dass insbesondere eine Beeinträchtigung der Regelventilstruktur verhindert werden kann.

Eine Durchmischung der Scherschicht wird nochmals verbessert, wenn die Volumenstromverwirbelungselemente, gemäss der Erfindung, in Umfangsrichtung zumindest teilweise unterschiedlich lang ausgebildet sind.

Das vorliegende Regelventil kann baulich unterschiedlichst ausgestaltet sein, sofern es dem Absperren oder zumindest dem Drosseln eines gasförmigen Volumenstroms dienen kann.

Hinsichtlich eines bevorzugten Einsatzgebietes an einer Dampfturbine ist vorgesehen, dass der gasförmige Volumenstrom ein Dampfvolumenstrom ist.

Somit wird die Aufgabe der Erfindung auch von einer Turbine, insbesondere von einer Dampfturbine, mit einer Vielzahl an Ventileinrichtungen gelöst, wobei zumindest eine der Ventileinrichtungen ein Regelventil nach einem der hier beschriebenen Merkmale umfasst.

Vorteilhafterweise wird der Wirkungsgrad der Turbine, insbesondere der Dampfturbine, signifikant erhöht, wenn zumindest die relevanten Ventileinrichtungen der Turbine bzw. der Dampfturbine ein im Sinne der Erfindung ausgestaltetes Regelventil aufweisen.

Die im gasförmigen Volumenstrom als Störkörper wirkende Volumenstromverwirbelungselemente können hierbei beispielsweise kurz vor - in Strömungsrichtung gesehen - dem Drosselkantenbereich an dem Ventilgehäuse angeordnet sein.

Um Strömungsverluste im Regelventil möglichst klein zu halten, sollte die über die Ventilgehäuseinnenseite überstehende Höhe dieser Volumenstromverwirbelungselemente so gering wie möglich ausgestaltet sein.

Da sich eine kritische Scherschicht im Wesentlichen lediglich in einem angedrosselten Betriebszustand des Regelventils ausprägt, hat eine Höhenbegrenzung der Volumenstromverwirbelungselemente keinen oder nur einen zu vernachlässigenden Einfluss auf deren Wirksamkeit.

Darüber können die Druckverluste an dem Regelventil in einem erträglichen bzw. in einem zu vernachlässigenden Rahmen gehalten werden.

Sind die Volumenstromverwirbelungselemente konzentrisch um die Verlagerungsachse herum gegenüber dem Drosselkantenbereich an dem Ventilgehäuse angeordnet, kann die Scherschicht umfänglich besonders effektiv manipuliert werden. Verwirbelungselemente sind dabei, gemäss der Erfindung, unsymmetrisch in Umfangsrichtung angeordnet.

Kumulativ oder alternativ ist es vorteilhaft, wenn die Volumenstromverwirbelungselemente konzentrisch um die Verlagerungsachse herum an dem Drosselkantenbereich des verlagerbaren Ventildrosselelements angeordnet sind. Auch mit unmittelbar in dem Drosselkantenbereich integrierten Volumenstromverwirbelungselementen können die vorteilhaften Effekte der Erfindung erzielt werden.

Es versteht sich, dass die Volumenstromverwirbelungselemente nahezu beliebig konzentrisch um die Verlagerungsachse herum angeordnet sein können.

Hierbei spielt es keine Rolle, ob die Volumenstromverwirbelungselemente an dem Ventilsitz oder an dem Drosselkantenbereich angeordnet sind.

Die Effekte hinsichtlich der Scherschicht, insbesondere die Durchmischung der Scherschicht, können besonders gut ausgeprägt sein, wenn der Drosselkantenbereich des verlagerbaren Ventildrosselelements an einer dem Ventilsitz zugewandten Seite unsymmetrisch ausgestaltet ist.

Insofern ist es vorteilhaft, wenn der Drosselkantenbereich des verlagerbaren Ventildrosselelements in seiner Umfangsrichtung unsymmetrisch ausgestaltet ist. Auch hierdurch lässt sich die Durchmischung der Scherschicht sehr gut beeinflussen.

Durch eine Änderung der Geometrie des Drosselkantenbereichs kann eine positive Beeinflussung, insbesondere eine verbesserte Durchmischung, der Scherschicht erzielt werden.

Konstruktiv sehr einfach können sie verwirklicht sein, wenn der Drosselkantenbereich des verlagerbaren Ventildrosselelements, gemäss der Erfindung, Materialausnehmungen und/oder Materialstege aufweist.

Diese Materialausnehmungen und/oder die Materialanhäufungen können besonders gut speziell im angedrosselten Zustand des Regelventils wirken, wenn die Materialausnehmungen und/oder die Materialstege dem Ventilsitz zugewandt sind.

Es können die Effekte hinsichtlich der Scherschicht besonders gut ausgeprägt sein, wenn die Materialausnehmungen und/oder die Materialstege, wie gemäss der Erfindung, in Umfangsrichtung des Drosselkantenbereichs ungleichmäßig verteilt an dem Ventildrosselelement angeordnet sind.

Eine Durchmischung der Scherschicht kann nochmals verbessert werden, wenn die Materialausnehmungen und/oder die Materialstege, wie gemäss der Erfindung, in Umfangsrichtung zumindest teilweise unterschiedlich lang ausgebildet sind.

Hinsichtlich einer besonders vorteilhaften Ausgestaltung der Erfindung kann der Drosselkantenbereich des verlagerbaren Ventildrosselelements an einer der dem Ventilsitz zugewandten Seite eine gezackte Kronenform aufweisen.

Die Zacken der Kronenform können durch ein Wechselspiel zwischen den in Umfangsrichtung verlaufenden Materialausnehmungen und Materialstegen konstruktiv einfach verwirklicht sein.

Insofern kann die Kronenform unsymmetrisch oder symmetrisch ausgestaltet sein, so dass eine gleichmäßig oder ungleichmäßig ausgebildete Kronenform vorliegen kann.

Weitere Merkmale, Effekte und Vorteile vorliegender Erfindung werden anhand anliegender Zeichnung und nachfolgender Beschreibung erläutert, in welchen beispielhaft ein Regelventil und unterschiedlich ausgebildete Drosselkantenbereiche von noch beispielhaft gezeigten Ventildrosselelementen dargestellt und beschrieben sind.

In der Zeichnung zeigen:
Figur 1 schematisch eine Modellansicht eines nicht zur Erfindung gehörenden Regelventils zum Regeln eines Dampfvolumenstroms mit einer Vielzahl an mit dem Drosselkantenbereich wechselwirkenden Volumenstromverwirbelungselementen, welche Scherschichtinstabilitäten in einer Scherschicht zwischen einem Wandstrahlbereichs des gasförmigen Volumenstroms und einem Kernströmungsbereich des gasförmigen Volumenstroms vermeiden;
Figur 2 schematisch eine perspektivische Ansicht eines anderen nicht zur Erfindung gehörenden Ventildrosselelements mit mehreren in Umfangsrichtung symmetrisch an einem Drosselkantenbereich angeordneten Volumenstromverwirbelungselementen; und
Figur 3 schematisch eine perspektivische Ansicht eines erfindungsgemässen Ventildrosselelements mit mehreren in Umfangsrichtung unsymmetrisch an einem Drosselkantenbereich angeordneten Volumenstromverwirbelungselementen.

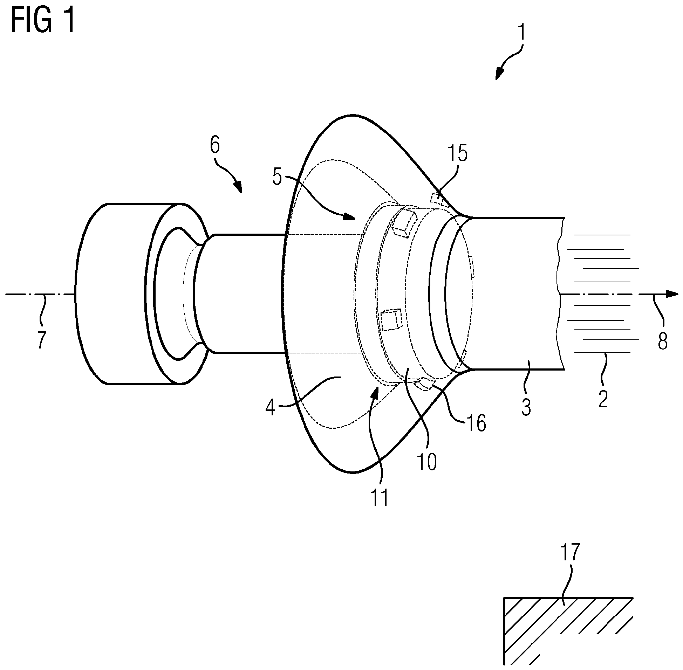

Das in der Figur 1 gezeigte Regelventil 1 zum Regeln bzw. zumindest zum Androsseln speziell eines Dampfvolumenstroms 2 weist ein Ventilgehäuse 3 mit einem Strömungsinnenraum 4 auf, an dessen Innenseite (nicht gesondert beziffert) ein kegelförmiger Ventilsitz 5 ausgebildet ist.

In dem Ventilgehäuse 3 ist ein gegenüber dem Ventilsitz 5 verlagerbares Ventildrosselelement 6 angeordnet, wobei dieses Ventildrosselelement 6 entlang einer Verlagerungsachse 7 verschieblich ist.

Der Dampfvolumenstrom 2 durchströmt das Regelventil 1 hierbei in Durchströmungsrichtung 8.

Das Ventildrosselelement 6 besitzt einen Drosselkantenbereich 10, welcher mit dem in dem Ventilgehäuse 3 eingelassenen Ventilsitz 5 umso stärker wechselwirken kann, je näher das Ventildrosselelement 6 an den Ventilsitz 5 heran bewegt wird. Dies trifft insbesondere dann zu, wenn das Regelventil 1 in einem angedrosselten Betriebszustand gefahren wird, bei welchem das Ventildrosselelement 6 nur mit einem geringeren Spalt von dem Ventilsitz 5 beabstandet angeordnet ist als in einem geöffneten Betriebszustand des Regelventils 1.

Der Drosselkantenbereich 10 ist zumindest teilweise kegel- oder torusförmig ausgestaltet, so dass er kompatibel zu dem kegelförmigen Ventilsitz 5 ist.

Der Drosselkantenbereich 10 erstreckt sich hierbei ringförmig um die Verlagerungsachse 7 herum.

Ferner ist der Drosselkantenbereich 10 an einem Ende 11 des Ventildrosselelements 6 ausgeprägt, welches dem Ventilsitz 5 zugewandt ist.

Um Scherschichtinstabilitäten zu vermeiden oder zumindest zu reduzieren, weist das Regelventil 1 eine Vielzahl an mit dem Drosselkantenbereich 10 wechselwirkenden Volumenstromverwirbelungselementen 15 (nur exemplarisch beziffert) auf, mittels welchen eine signifikant verbesserte Durchmischung der Scherschicht (nicht gezeigt) erzielt wird, so dass Geschwindigkeitsgradienten zwischen einem Wandstrahlbereich (nicht gezeigt) des Dampfvolumenstroms 2 und einem Kernströmungsbereich (nicht gezeigt) des Dampfvolumenstroms 2 vermieden oder zumindest abgemildert werden können.

Bei dem in der Figur 1 gezeigten Beispiel sind die Volumenstromverwirbelungselemente 15 konzentrisch um die Verlagerungsachse 7 herum an dem Ventilgehäuse 3 und gegenüber dem Drosselkantenbereich 10 angeordnet.

Die Volumenstromverwirbelungselemente 15 sind hierbei als Materialanhäufungen 16 an dem Ventilgehäuse 3 ausgestaltet, welche an dem Ventilsitz 5 ausgeprägt sind.

Das in der Figur 1 gezeigte Regelventil 1 wird als Drosselventil in einer Ventileinrichtung einer hier nicht weiter gezeigten Dampfturbine 17 eingesetzt.

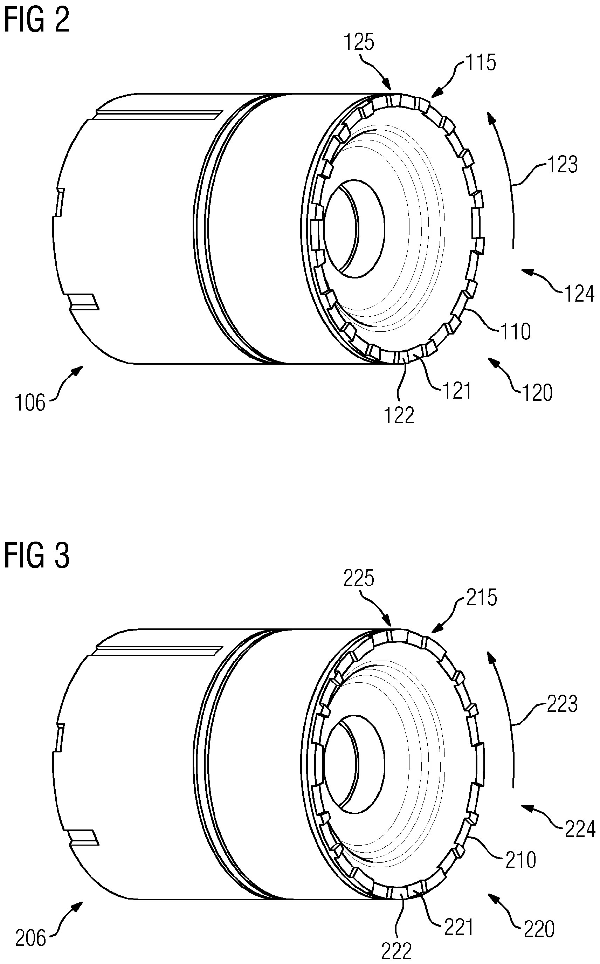

Bei dem in der Figur 2 gezeigten Beispiels eines anderen Ventildrosselelement 106, welches ein Bestandteil eines ähnlichen wie in der Figur 1 gezeigten Regelventils 1 sein kann, wobei das dem anderen Ventildrosselelement 106 zugehörige Regelventil nicht gezeigt ist.

Das Ventildrosselelement 106 weist einen zumindest teilweise kegelförmig ausgebildeten Drosselkantenbereich 110 auf, welcher an einer dem Ventilsitz 5 (siehe beispielhaft Figur 1) zugewandten Seite 120 symmetrisch ausgestaltet ist.

An dem Drosselkantenbereich 110 des Ventildrosselelements 106 sind eine Vielzahl an Volumenstromverwirbelungselemente 115 angeordnet, welche in diesem Ausführungsbeispiel als Materialausnehmungen 121 an dem Drosselkantenbereich 110 ausgeprägt sind.

Die Materialausnehmungen 121 bedingen auch Materialstege 122 an dem Drosselkantenbereich 110, wobei jeweils zwei Materialstege 122 eine Materialausnehmung 121 seitlich in Umfangsrichtung 123 des Drosselkantenbereichs 110 begrenzen und vice versa.

Diese Materialausnehmungen 121 sind als Taschenbereiche in den Drosselkantenbereich 110 eingelassen und sie vermeiden Scherschichtinstabilitäten in einer Scherschicht zwischen einem Wandstrahlbereichs des Dampfvolumenstroms und einem Kernströmungsbereich des Dampfvolumenstroms.

Die Materialausnehmungen 121 bzw. die Materialstege 122 sind in Umfangsrichtung 123 des Drosselkantenbereichs 110 gleichmäßig verteilt an dem Ventildrosselelement 106 angeordnet.

Jedenfalls ist der Drosselkantenbereich 110 des verlagerbaren Ventildrosselelements 106 an seiner der dem Ventilsitz 5 zugewandten Seite 124 in Gestalt einer gezackten Kronenform 125 realisiert, wobei die Zacken durch die Materialstege 122 ausgeformt sind.

Mittels des derart ausgestalteten Ventildrosselelements 106 können die Scherschichtinstabilitäten in einer Scherschicht zwischen einem Wandstrahlbereichs des Dampfvolumenstroms 2 (siehe beispielhaft Figur 1) und einem Kernströmungsbereich des Dampfvolumenstroms 2 kumulativ oder alternativ vermieden werden.

Bei dem in der Figur 3 gezeigten weiteren Ventildrosselelement 206, genäss der Erfindung, in etwa baugleich mit dem in der Figur 2 gezeigten anderen Ventildrosselelement 106 ist, sind die an dem Drosselkantenbereich 210 vorgesehenen Materialausnehmungen 221 bzw. Materialstegen 222 in Umfangsrichtung 223 des Drosselkantenbereichs 210 ungleichmäßig verteilt an dem Ventildrosselelement 206 angeordnet, wodurch die Effekte hinsichtlich der Vermeidung von Scherschichtinstabilitäten in einer Scherschicht zwischen einem Wandstrahlbereichs des Dampfvolumenstroms 2 (siehe beispielhaft Figur 1) und einem Kernströmungsbereich des Dampfvolumenstroms 2 nochmals verstärkt werden können.

Die an dem Drosselkantenbereich 210 eingearbeiteten Materialausnehmungen 221 und insofern auch die mit diesen korrespondierenden Materialstege 222 sind in Umfangsrichtung 223 des Drosselkantenbereichs 210 unterschiedlich lang ausgebildet. Auch dieses weitere Ventildrosselelement 206 kann ein Bestandteil eines ähnlichen wie in der Figur 1 gezeigten Regelventils 1 sein, wobei auch das dem anderen Ventildrosselelement 206 zugehörige Regelventil nicht gezeigt ist.

Das Ventildrosselelement 206 weist somit einen zumindest teilweise kegelförmig ausgebildeten Drosselkantenbereich 210 auf, welcher an einer dem Ventilsitz 5 (siehe beispielhaft Figur 1) zugewandten Seite 224 jedoch unsymmetrisch ausgestaltet ist.

Insofern sind an dem Drosselkantenbereich 210 des Ventildrosselelements 206 ebenfalls eine Vielzahl an Volumenstromverwirbelungselemente 215 vorhanden, welche in dem in der Figur 3 gezeigten Ausführungsbeispiel als Materialausnehmungen 221 in Gestalt von Taschenbereichen an dem Drosselkantenbereich 210 ausgeprägt sind.

Die Materialausnehmungen 221 bzw. die Materialstege 222 sind in Umfangsrichtung 223 des Drosselkantenbereichs 210 ungleichmäßig verteilt an dem Ventildrosselelement 206 angeordnet.

Auch der Drosselkantenbereich 210 des verlagerbaren Ventildrosselelements 206 ist an seiner der dem Ventilsitz 5 zugewandten Seite 224 in Gestalt einer gezackten Kronenform 225 realisiert.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Regelventil (1) zum Regeln eines gasförmigen Volumenstroms, mit einem Ventilgehäuse (3), mit einem Ventilsitz (5) und mit einem relativ zu dem Ventilsitz (5) entlang einer Verlagerungsachse (7) verlagerbaren Ventildrosselelement (6; 106; 206), bei welchem das Ventilgehäuse (3) den Ventilsitz (5) ausgestaltet und bei welchem das verlagerbare Ventildrosselelement (6; 106; 206) einen mit dem Ventilsitz (5) wechselwirkenden Drosselkantenbereich (10; 110; 210) aufweist,
wobei das Regelventil (1) mehrere mit dem Drosselkantenbereich (10; 110; 210) wechselwirkende Volumenstromverwirbelungselemente (15; 115; 215) aufweist, welche Scherschichtinstabilitäten in einer Scherschicht zwischen einem Wandstrahlbereich des gasförmigen Volumenstroms und einem Kernströmungsbereich des gasförmigen Volumenstroms vermeiden oder zumindest verringern, wobei der Drosselkantenbereich (110; 210) des verlagerbaren Ventildrosselelements (106; 206) Materialausnehmungen (121; 221) und/oder Materialstege (122; 222) aufweist, **dadurch gekennzeichnet, dass** die Materialausnehmungen (221) und/oder die Materialstege (222) in Umfangsrichtung (223) zumindest teilweise unterschiedlich lang ausgebildet sind.

2. Regelventil (1) nach Anspruch 1,
wobei die Volumenstromverwirbelungselemente (15) konzentrisch um die Verlagerungsachse (7) herum gegenüber dem Drosselkantenbereich (10) an dem Ventilgehäuse (3) angeordnet sind.

3. Regelventil (1) nach Anspruch 1 oder 2,
wobei die Volumenstromverwirbelungselemente (15) konzentrisch um die Verlagerungsachse (7) herum an dem Drosselkantenbereich (110; 210) des verlagerbaren Ventildrosselelements (106; 206) angeordnet sind.

4. Regelventil (1) nach einem der Ansprüche 1 bis 3,
wobei der Drosselkantenbereich (210) des verlagerbaren Ventildrosselelements (206) an einer dem Ventilsitz (5) zugewandten Seite (224) unsymmetrisch ausgestaltet ist.

5. Regelventil (1) nach einem der Ansprüche 1 bis 4,
wobei der Drosselkantenbereich (210) des verlagerbaren Ventildrosselelements (206) in seiner Umfangsrichtung (223) unsymmetrisch ausgestaltet ist.

6. Regelventil (1) nach einem der Ansprüche 1 bis 5,
wobei die Materialausnehmungen (121; 221) und/oder die Materialstege (122; 222) dem Ventilsitz (5) zugewandt sind.

7. Regelventil (1) nach einem der Ansprüche 1 bis 6,
wobei die Materialausnehmungen (221) und/oder die Materialstege (222) in Umfangsrichtung (223) des Drosselkantenbereichs (210) ungleichmäßig verteilt an dem Ventildrosselelement (206) angeordnet sind.

8. Regelventil (1) nach einem der Ansprüche 1 bis 7,
wobei der Drosselkantenbereich (110; 210) des verlagerbaren Ventildrosselelements (106; 206) an einer der dem Ventilsitz (5) zugewandten Seite (123; 223) eine gezackte Kronenform (125; 225) aufweist.

9. Regelventil nach einem der Ansprüche 1 bis 8, wobei der gasförmige Volumenstrom ein Dampfvolumenstrom (2) ist.

10. Turbine mit einer Vielzahl an Ventileinrichtungen,
wobei zumindest eine der Ventileinrichtungen ein Regelventil (1) nach einem der vorstehenden Ansprüche umfasst.

11. Turbine nach Anspruch 10, wobei die Turbine eine Dampfturbine (17) ist.

## Claims

1. Regulating valve (1) for regulating a gaseous volume flow, having a valve housing (3), having a valve seat (5) and having a valve throttle element (6; 106; 206) which is displaceable along a displacement axis (7) relative to the valve seat (5), in which valve the valve housing (3) forms the valve seat (5) and in which valve the displaceable valve throttle element (6; 106; 206) has a throttle edge region (10; 110; 210) which interacts with the valve seat (5), wherein the regulating valve (1) has a plurality of volume-flow swirl elements (15; 115; 215) which interact with the throttle edge region (10; 110; 210) and which prevent or at least reduce shear-layer instabilities in a shear layer between a wall-jet region of the gaseous volume flow and a core-flow region of the gaseous volume flow, wherein the throttle edge region (110; 210) of the displaceable valve throttle element (106; 206) has material recesses (121; 221) and/or material webs (122; 222), **characterized in that** the material recesses (221) and/or the material webs (222) are at least in part of different length in the circumferential direction (223).

2. Regulating valve (1) according to Claim 1,
wherein the volume-flow swirl elements (15) are arranged on the valve housing (3) concentrically around the displacement axis (7) and opposite the throttle edge region (10) .

3. Regulating valve (1) according to Claim 1 or 2,
wherein the volume-flow swirl elements (15) are arranged on the throttle edge region (110; 210) of the displaceable valve throttle element (106; 206) concentrically around the displacement axis (7).

4. Regulating valve (1) according to one of Claims 1 to 3, wherein the throttle edge region (210) of the displaceable valve throttle element (206) is formed asymmetrically on a side (224) facing the valve seat (5).

5. Regulating valve (1) according to one of Claims 1 to 4, wherein the throttle edge region (210) of the displaceable valve throttle element (206) is formed asymmetrically in the circumferential direction (223) of said region.

6. Regulating valve (1) according to one of Claims 1 to 5, wherein the material recesses (121; 221) and/or the material webs (122; 222) face the valve seat (5).

7. Regulating valve (1) according to one of Claims 1 to 6, wherein the material recesses (221) and/or the material webs (222) are arranged on the valve throttle element (206) in an unevenly distributed manner in the circumferential direction (223) of the throttle edge region (210).

8. Regulating valve (1) according to one of Claims 1 to 7, wherein the throttle edge region (110; 210) of the displaceable valve throttle element (106; 206) has a serrated crown shape (125; 225) on a side (123; 223) facing the valve seat (5).

9. Regulating valve according to one of Claims 1 to 8, wherein the gaseous volume flow is a steam volume flow (2).

10. Turbine having a multiplicity of valve devices,
wherein at least one of the valve devices comprises a regulating valve (1) according to one of the preceding claims.

11. Turbine according to Claim 10, wherein the turbine is a steam turbine (17).

## Revendications

1. Soupape (1) de régulation pour réguler un courant gazeux en volume, comprenant un corps (3) de soupape, comprenant un siège (5) de soupape et comprenant un élément (6; 106; 206) d'étranglement de soupape, qui peut être déplacé par rapport au siège (5) de la soupape le long d'un axe (7) de déplacement, dans laquelle le corps (3) de la soupape conforme le siège (5) de la soupape et dans laquelle l'élément (6; 106; 206) d'étranglement de la soupape, qui peut être déplacé, a une partie (10; 110; 210) à bord d'étranglement interagissant avec le siège (5) de la soupape,
dans laquelle la soupape (1) de régulation a plusieurs éléments (15; 115; 215) de tourbillonnement du courant en volume interagissant avec la partie (10; 110; 210) de bord d'étranglement, lesquels empêchent ou au moins diminuent des instabilités de couche de cisaillement dans une couche de cisaillement entre une partie de passage sur la paroi du courant gazeux en volume et une partie de coeur d'écoulement du courant gazeux en volume, dans laquelle la partie (110; 210) de bord d'étranglement de l'élément (106; 206) d'étranglement de soupape, pouvant être déplacé, a des évidements (121; 221) de matière et/ou des nervures (122; 222) de matière, **caractérisée en ce que** les évidements (221) de matière et/ou les nervures (222) de matière sont constitués dans la direction (223) périphérique en ayant, au moins en partie, des longueurs différentes.

2. Soupape (1) de régulation suivant la revendication 1,
dans laquelle les éléments (15) de tourbillonnement du courant en volume sont disposés sur le corps (3) de la soupape, en face de la partie (10) de bord d'étranglement, concentriquement autour de l'axe (7) de déplacement.

3. Soupape (1) de régulation suivant la revendication 1 ou 2,
dans laquelle les éléments (15) de tourbillonnement du courant en volume sont disposés, concentriquement autour de l'axe (7) de déplacement, sur la partie (110; 210) de bord d'étranglement de l'élément (106; 206) d'étranglement de la soupape, pouvant être déplacé.

4. Soupape (1) de régulation suivant l'une des revendications 1 à 3,
dans laquelle la partie (210) de bord d'étranglement de l'élément (206) d'étranglement de la soupape, pouvant être déplacé, est conformée dissymétriquement d'un côté (224) tourné vers le siège (5) de la soupape.

5. Soupape (1) de régulation suivant l'une des revendications 1 à 4,
dans laquelle la partie (210) de bord d'étranglement de l'élément (206) d'étranglement de la soupape, pouvant être déplacé, est conformée dissymétriquement dans sa direction (223) périphérique.

6. Soupape (1) de régulation suivant l'une des revendications 1 à 5,
dans laquelle les évidements (121; 221) de matière et/ou les nervures (122; 222) de matière sont tournés vers le siège (5) de la soupape.

7. Soupape (1) de régulation suivant l'une des revendications 1 à 6,
dans laquelle les évidements (221) de matière et/ou les nervures (222) de matière sont prévus sur l'élément (206) d'étranglement de la soupape, en étant répartis d'une manière inégale dans la direction (223) périphérique de la partie (206) de bord de l'étranglement.

8. Soupape (1) de régulation suivant l'une des revendications 1 à 7,
dans laquelle la partie (110; 210) de bord de l'étranglement de l'élément (106; 206) d'étranglement de la soupape, pouvant être déplacé, a une forme (125; 225) en couronne dentelée du côté (123; 223) tourné vers le siège (5) de la soupape.

9. Soupape (1) de régulation suivant l'une des revendications 1 à 8,
dans laquelle le courant gazeux en volume est un courant (2) en volume de vapeur.

10. Turbine, ayant une pluralité de dispositifs de soupape,
dans laquelle au moins l'un des dispositifs de soupape comprend une soupape (1) de régulation suivant l'une des revendications précédentes.

11. Turbine suivant la revendication 10,
dans laquelle la turbine est une turbine (17) à vapeur.
